# EUROPÄISCHE PATENTANMELDUNG

(11) **EP 4 620 902 A1**
(43) Veröffentlichungstag der Anmeldung: **24.09.2025**
(21) Anmeldenummer: 24020084.0
(22) Anmeldetag: 19.03.2024
(51) Int. Cl.: C01B 3/02, B01D 53/04, B01D 53/047, C01B 3/50, C01C 1/04, F25J 3/04

(54) **VERFAHREN UND ANLAGE ZUR HERSTELLUNG VON AMMONIAK**

(71) Anmelder: Linde GmbH, 82049 Pullach (DE)
(72) Erfinder: Vincentelli, Martin, 82049 Pullach (DE); Reinke, Michael, 82049 Pullach (DE); Ried, Thomas, 82049 Pullach (DE)
(74) Vertreter: Fischer, Werner

(57) **Zusammenfassung**

Es wird ein Verfahren (100, 200) zur Herstellung von, insbesondere blauem, Ammoniak vorgeschlagen, bei dem Wasserstoff (2) bereitgestellt, mit Stickstoff gemischt und unter Erhalt eines ammoniakhaltigem Produktgas (4) einer Ammoniaksynthese (30) unterworfen wird. Das ammoniakhaltige Produktgas (4) wird anschließend unter Erhalt von verflüssigtem Ammoniak (5) einer Kühlung (40) unterworfen. Zur Bereitstellung des Wasserstoffs (2) umfasst, ein Wasserstoff und Kohlenstoffdioxid enthaltendes Gasgemisch (1) bereitzustellen und unter Erhalt von Wasserstoff (2) und Kohlenstoffdioxid (6, 8) Aufbereitungsschritten zu unterwerfen, die eine Wasserstoffaufbereitung (60) und eine Kohlenstoffdioxidabtrennung (20) umfassen. Für die Kühlung (40) wird das Kohlenstoffdioxid (6, 8) oder ein Teil hiervon als Kältemedium verwendet. Eine entsprechende Anlage (100, 200) wird ebenfalls vorgeschlagen.

## Beschreibung

Die Erfindung betrifft ein Verfahren und eine Anlage zur Herstellung von Ammoniak.

### Hintergrund

Bei der herkömmlichen Produktion von Ammoniak wird ein aus Wasserstoff und Stickstoff bestehendes Synthesegas verdichtet und anschließend in einem Ammoniaksynthesereaktor in ein ammoniakhaltiges Produktgases umgesetzt, das mit Hilfe eines durch einen Kältemittelverdichter abgetriebenen Ammoniak-Kühlkreislauf abgekühlt wird, um Ammoniak auszukondensieren.

Zur Herstellung des für die Ammoniaksynthese benötigten Wasserstoffs können kohlenwasserstoffhaltige Einsatzstoffe z.B. mittels Dampfreformierung, partieller Oxidation, autothermer Reformierung oder einer Kombination dieser Verfahren, die zusätzlich mit einem Gas-Heated-Reformer kombiniert werden können, umgesetzt werden. Bei allen diesen Verfahren entsteht Kohlenstoffdioxid. Typischerweise wird das Kohlenstoffdioxid mittels einer chemischen oder physikalischen Wäsche oder mittels Druckwechseladsorption aus einem Produktgemisch der genannten Verfahren abgetrennt und als Bestandteil eines kohlenstoffdioxidreichen Stoffgemisches erhalten. Falls das abgetrennte Kohlenstoffdioxid nicht in einem nachfolgenden Prozess, wie beispielsweise zur Produktion von Harnstoff, benötigt wird, wird es herkömmlicherweise an die Atmosphäre abgegeben.

Neuerdings gewinnt die Erzeugung von sogenanntem blauem Ammoniak an Bedeutung. Hierbei wird angestrebt, durch geeignete Verfahrensschritte die Freisetzung von Kohlenstoffdioxid an die Atmosphäre so weit wie möglich zu vermeiden. Dies kann beispielsweise dadurch erreicht werden, dass anfallendes Kohlenstoffdioxid zur Endlagerung in eine unterirdische Lagerstätte eingebracht wird. Dies wird auch als Sequestrierung bezeichnet.

Für die Sequestrierung muss eine Kohlenstoffdioxidfraktion gewissen Reinheitsanforderungen genügen. Beispielsweise dürfen sein Wasseranteil 50ppmv, sein Kohlenmonoxidanteil 1mol-% und sein Wasserstoffanteil 1mol-% nicht überschreiten, während sein Kohlenstoffdioxidanteil über 95mol-% liegen muss. Für den Transport zur Lagerstätte muss die Kohlenstoffdioxidfraktion entweder verflüssigt oder auf einen überkritischen Absolutdruck von mehr als 73,8 bar verdichtet werden. Folglich sind in einer herkömmlichen Anlage zur Herstellung von blauem Ammoniak typischerweise mindestens drei Verdichter nötig: ein Synthesegasverdichter, ein Kältemittelverdichter und ein Kohlenstoffdioxidverdichter.

Es besteht der Bedarf nach weniger aufwendigen Verfahren und Anlagen zur Herstellung von blauem Ammoniak.

### Überblick

Es werden ein Verfahren und eine Anlage mit den Merkmalen der unabhängigen Ansprüche vorgeschlagen. Ausgestaltungen sind Gegenstand der abhängigen Ansprüche und der nachfolgenden Beschreibung.

Das vorgeschlagene Verfahren zur Herstellung von Ammoniak umfasst, dass Wasserstoff bereitgestellt und mit Stickstoff zu einem Synthesegas gemischt wird, das verdichtet und bei erhöhtem Druck unter Erhalt eines ammoniakhaltigen Produktgases einer Ammoniaksynthese unterworfen wird. Das erzeugte ammoniakhaltige Produktgas enthält neben Ammoniak auch nicht reagierten Wasserstoff, Stickstoff und andere, für die Ammoniaksynthesereaktion inerte Komponenten wie Argon und Methan. Das ammoniakhaltige, mit einer Temperatur von typischerweise mehr als 400°C erhaltene Produktgas wird einer Kühlung unterworfen, bei der Ammoniak auskondensiert und verflüssigter Ammoniak erhalten wird. Die Kühlung kann dabei insbesondere in mehreren Schritten durchgeführt werden.

Um den für die Ammoniaksynthese benötigten Wasserstoffs zu gewinnen, wird ein Wasserstoff und Kohlenstoffdioxid enthaltendes Gasgemisch unter Erhalt von Wasserstoff und Kohlenstoffdioxid Aufbereitungsschritten unterwerfen, die eine Kohlenstoffdioxidabtrennung und eine Wasserstoffaufbereitung umfassen. Zur Kohlenstoffdioxidabtrennung kann das Wasserstoff und Kohlenstoffdioxid enthaltende Gasgemisch beispielsweise einer Aminwäsche (chemische Wäsche), einer Methanolwäsche (physikalische Wäsche), einem adsorptiven Verfahren, einem Kondensationsprozess und/oder einer Membrantrennung unterzogen werden, wobei ein Kohlenstoffdioxidfraktion erhalten wird. Die Wasserstoffaufbereitung kann unter erhalt einer Wasserstofffraktion durch Druckwechseladsorption, Temperaturwechseladsorption in Kombination mit einer Flüssig-Stickstoffwäsche und/oder Membrantrennung erfolgen. Der Wasserstoffaufbereitung kann dabei insbesondere eine Methanisierung vorgeschaltet sein.

In dem vorgeschlagenen Verfahren ist vorgesehen, dass zur Kühlung des ammoniakhaltigen Produktgases die bei der Kohlenstoffdioxidabtrennung anfallende Kohlenstoffdioxidfraktion oder ein Teil hiervon als Kältemedium verwendet wird. Dabei kann die Kohlenstoffdioxidfraktion oder ein Teil hiervon insbesondere auch in einem Speichertank gespeichert werden, wodurch ein Ausfall eines zur Kohlendioxidaufbereitung eingesetzten Kohlenstoffdioxid-Verdichters zeitlich überbrückt werden kann.

Durch die Verknüpfung der Ammoniaksynthese mit der Kohlenstoffdioxidabtrennung kann auf eine mit Ammoniak als Kältemittel betriebene Kälteanlage verzichtet bzw. kann eine derartige Kälteanlage kleiner ausgelegt werden, wodurch der Investitionsaufwand für Anlagen zur Herstellung von Ammoniak reduziert wird.

In einer Ausführungsform wird die bei der Kohlenstoffdioxidabtrennung erhaltene Kohlenstoffdioxidfraktion einer Kohlenstoffdioxidaufbereitung unterworfen, bei der aufbereitetes Kohlenstoffdioxid erhalten wird. Die Kohlenstoffdioxidaufbereitung umfasst insbesondere eine Verdichtung, Kühlung, Trocknung, Kondensation und/oder Aufreinigung des Kohlenstoffdioxids. Durch die vorgeschlagenen Maßnahmen wird eine vorteilhafte Kombination und Integration dieser oder eines beliebigen Teils entsprechender Verfahrensschritte erzielt.

In einer Ausführungsform wird zur Kohlenstoffdioxidaufbereitung ein Kühler verwendet, um in der Kohlenstoffdioxidfraktion enthaltenes Wasser auszukondensieren. Dem Kühler kann ein adsorptiver Trockner nachgeschaltet sein, der mit einem per Regeneriergaserhitzer erwärmten Regeneriergas regeneriert wird. Dadurch, dass die Trocknung hierbei teilweise kondensativ, d.h. durch Abkühlung und Kondensation, vorgenommen wird, können Adsorber und Regeneriergaserhitzers kleiner ausgeführt werden. Dementsprechend wird auch der Energiebedarf für die Regenerierung der Adsorber-Station geringer.

In dem vorgeschlagenen Verfahren kann insbesondere vorgesehen sein, dass bereits vorhandenes aufbereitetes Kohlenstoffdioxid stromaufwärts der Trocknung als Kältemittel zur Vorkühlung der aufzubereitenden Kohlenstoffdioxidfraktion verwendet eingesetzt wird. Des Weiteren kann mit Hilfe des Kältemittels das Kohlenstoffdioxid verflüssigt und/oder unterkühlt werden, bevor es in eine Endlagerstätte gepumpt wird. Mittels des vorgeschlagenen Verfahrens werden bedeutende Synergieeffekte erzielt, wobei entsprechende Details nachfolgend noch erläutert werden.

In einer Ausführungsform wird der Ammoniaksynthese ferner ein Stickstoffstrom oder ein Teil hiervon zugeführt, der unter Verwendung eines Stickstoffbereitstellungsschritts erzeugt wird, wobei der Stickstoffbereitstellungsschritt eine kryogene Luftzerlegung und/oder ein Membranverfahren und/oder ein adsorptives Verfahren zur Abtrennung von Stickstoff aus Luft umfasst. Bestimmte Ausgestaltungen können dabei auch eine Kälteintegration mit entsprechenden Schritten, z.B. einer Luftkühlung, umfassen. Für die kryogene Luftzerlegung kann insbesondere das aufbereitete Kohlenstoffdioxid oder ein Teil hiervon als Kältemedium verwendet werden. Vor der Ammoniaksynthese kann der aus Wasserstoff und Stickstoff gebildete Stoffstrom insbesondere durch einen Verdichter verdichtet werden.

In einer Ausführungsform wird ein kohlenwasserstoffhaltiges Einsatzgemisch einer Vorbehandlung unterworfen, durch die das Einsatzgemisch zum Wasserstoff und Kohlenstoffdioxid enthaltenden Gasgemisch umgewandelt wird. Die Vorbehandlung umfasst dabei insbesondere einen oder mehrere Schritte wie einer Hydrierung/ Entschwefelung/Entchlorung und/oder Vorreformierung und/oder einem Wasserstoffherstellungsschritt und/oder einer Wassergas-Shift-Reaktion. Bei dem Wasserstoffherstellungsschritt handelt es sich insbesondere um eine Dampfreformierung, eine partielle Oxidation, eine autotherme Reformierung, oder eine Kombination derer, die zusätzlich mit einem Gas-Heated-Reformer kombiniert werden können, während die Wassergas-Shift-Reaktion insbesondere eine Hochtemperatur-Shift-Reaktion, eine Mitteltemperatur-Shift-Reaktion, eine Niedertemperatur-Shift-Reaktion, eine Isotherme-Shift-Reaktion oder eine Kombination derer sein kann. Der für die partielle Oxidation und/oder die autotherme Reformierung benötigte Sauerstoff kann insbesondere im Stickstoffbereitstellungsschritt bereitgestellt und als Sauerstoffstrom dem Wasserstoffherstellungsschritt zugeführt werden.

Durch die Vorbehandlung des Einsatzgemisches werden in dem Einsatzgemisch enthaltene Schadstoffe, die für den Gesamtprozess nachteilig sein können, entfernt und somit die Effizienz des Verfahrens und die Lebensdauer der Anlage erhöht.

In einer Ausführungsform wird das Wasserstoff und Kohlenstoffdioxid enthaltende Gasgemisch unter Erhalt des Kohlenstoffdioxids und eines Wasserstoff enthaltenden ersten Restgases der Kohlenstoffdioxidabtrennung unterworfen und anschließend das erste Restgas oder ein Teil hiervon unter Erhalt des Wasserstoffs und eines zweiten Restgases der Wasserstoffaufbereitung unterworfen. Alternativ wird das Wasserstoff und Kohlenstoffdioxid enthaltende Gasgemisch unter Erhalt des Wasserstoffs und eines Wasserstoff und Kohlenstoffdioxid enthaltenden dritten Restgases zunächst der Wasserstoffaufbereitung unterworfen und anschließend das dritte Restgas oder ein Teil hiervon unter Erhalt des Kohlenstoffdioxids und eines vierten Restgases der Kohlenstoffdioxidabtrennung unterworfen.

Dadurch kann das Verfahren flexibel in verschiedenen Konfigurationen angewendet werden.

In einer Ausführungsform wird zur Kühlung und/oder Kondensation des ammoniakhaltigen Produktgases ein weiterer Kältekreislauf, insbesondere ein Kältekreislauf mit einem Ammoniak-Kältemedium, verwendet. Dadurch kann die Flexibilität des Verfahrens, insbesondere bei einer geringen Menge von Kohlenstoffdioxid, beispielsweise aufgrund eines Fehlers in der Kohlenstoffdioxidabtrennung oder -aufbereitung, weiterbetrieben werden.

In einer Ausführungsform wird als Kältemedium aufbereitetes Kohlenstoffdioxid oder ein Teil hiervon durch eine Expansionseinheit, insbesondere eine Expansionsturbine oder ein Drosselventil, entspannt und anschließend als Kältemedium verwendet. Wenn eine Expansionsturbine als Expansionseinheit verwendet wird, kann diese insbesondere mit einem Verdichter der Kohlenstoffdioxidaufbereitung und/oder einem Verdichter in der Kühlung des ammoniakhaltigen Produktgases zu einem Compander zusammengeschlossen sein.

In einer Ausführungsform wird zur Kühlung und/oder Kondensation als Kältemedium verwendetes aufbereitetes Kohlenstoffdioxid oder Teil hiervon anschließend wieder der Kohlenstoffdioxidaufbereitung unterworfen. Dabei wird das aufbereitete Kohlenstoffdioxid, das zuvor abgekühlt und kondensiert worden ist, insbesondere wieder abgekühlt und kondensiert und kann zur Speicherung aus der Anlage abgeführt oder weiter als Kältemedium verwendet werden.

In einer Ausführungsform wird der verflüssigte Ammoniak einem Ammoniakspeicherschritt zugeführt, bei dem der verflüssigte Ammoniak gespeichert wird. Im Ammoniakspeicherschritt entstehendes Boil-Offgas wird dabei in einem Kondensationsschritt verflüssigt, wobei im Kondensationsschritt insbesondere aufbereitetes Kohlenstoffdioxid als Kältemedium verwendet wird. Denkbar ist auch, Kohlenstoffdioxid aus einem Tank als Kältemedium zu verwenden.

Die vorgeschlagene Anlage zur Herstellung von, insbesondere blauem, Ammoniak ist dafür eingerichtet Wasserstoff bereitzustellen und zusammen mit Stickstoff unter Erhalt eines ammoniakhaltigen Produktgases einer Ammoniaksynthese zu unterwerfen und das ammoniakhaltige Produktgas unter Erhalt von verflüssigtem Ammoniak einer Kühlung zu unterwerfen, wobei die Bereitstellung des Wasserstoffs umfasst, ein Wasserstoff und Kohlenstoffdioxid enthaltendes Gasgemisch bereitzustellen und unter Erhalt von Wasserstoff und Kohlenstoffdioxid Aufbereitungsschritten zu unterwerfen, die eine Wasserstoffaufbereitung und eine Kohlenstoffdioxidabtrennung umfassen. Für die Kühlung des ammoniakhaltigen Produktgases wird das Kohlenstoffdioxid oder ein Teil hiervon als Kältemedium verwendet wird. Die Anlage ist insbesondere dazu ausgelegt, das zuvor beschriebenen Verfahren durchzuführen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen der Erfindung werden nachfolgend rein beispielhaft unter Bezugnahme auf die beigefügte Zeichnung beschrieben, wobei
Figur 1 ein Verfahren bzw. eine Anlage gemäß einer Ausgestaltung der Erfindung veranschaulicht,
Figur 2 ein Verfahren bzw. eine Anlage gemäß einer weiteren Ausgestaltung der Erfindung veranschaulicht.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

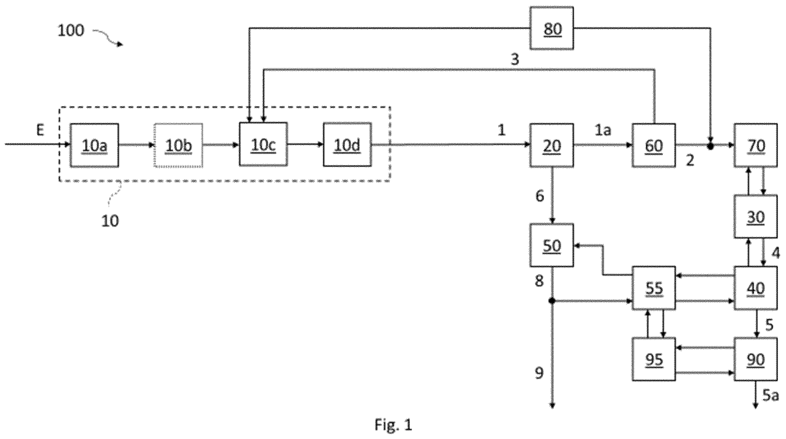

In Figur 1 ist ein Verfahren bzw. eine Anlage gemäß einer Ausgestaltung der vorliegenden Erfindung veranschaulicht und insgesamt mit 100 bezeichnet.

Im Verfahren bzw. der Anlage 100 wird ein kohlenwasserstoffhaltiges Einsatzgemisch E, beispielsweise Erdgas, zunächst einer Vorbehandlung 10 zugeführt. Die Vorbehandlung 10 startet mit einer Hydrierung, Entschwefelung und ggf. Entchlorung 10a, beispielsweise durch einen Hydrierer und Absorber. Anschließend durchläuft der vorbehandelte Einsatz eine Vorreformierung 10b und einen Wasserstoffherstellungsschritt 10c, der eine Dampfreformierung, autotherme Reformierung, partielle Oxidation, oder eine Kombination hiervon umfassen und zusätzlich mit einem Gas Heated-Reformer kombiniert werden kann. Die Vorreformierung 10b ist hierbei ein optionaler Schritt, der in der in Figur 1, aber auch in der durch die weitere Figur dargestellten Ausgestaltung, nicht zwingend notwendig ist. Dadurch wird ein Komponentengemisch erhalten, das insbesondere Kohlenstoffdioxid und Wasserstoff enthält, aber auch weitere Komponenten wie Kohlenstoffmonoxid oder erwünschte oder unerwünschte Nebenprodukte oder nicht umgesetzte Edukte enthalten kann. Zur Umsetzung des Kohlenstoffmonoxids zu Wasserstoff und Kohlenstoffdioxid wird das im Wasserstoffherstellungsschritt 10c erhaltene Komponentengemisch einer Wassergas-Shift-Reaktion 10d zugeführt, die eine Hochtemperatur-Shift-Reaktion, Mitteltemperatur-Shift-Reaktion, Niedertemperatur-Shift-Reaktion, Isotherme-Shift-Reaktion oder eine Kombination hiervon sein kann.

Der so aufbereitete Einsatz wird als Kohlenstoffdioxid und Wasserstoff enthaltendes Gasgemisch 1 anschließend einer Kohlenstoffdioxidentfernung 20 unterworfen, in der Kohlenstoffdioxid 6 und ein an Kohlenstoffdioxid abgereichertes erstes Restgas 1a erhalten werden.

Das erste Restgas 1a wird einer Wasserstoffaufbereitung 60 zugeführt, durch welche Wasserstoff 2 und ein an Wasserstoff abgereichertes zweites Restgas 3 erhalten werden. Das zweite Restgas 3 wird wiederum entweder dem Wasserstoffherstellungsschritt 10c zurückgeführt, in dem es zur Wasserstoffherstellung dient, oder als Brenngas zur Bereitstellung von Wärme verwendet.

Die Wasserstoffaufbereitung 60 kann dabei insbesondere eine Druckwechseladsorption, einer Temperaturwechseladsorption in Kombination mit einer Flüssig-Stickstoffwäsche und/oder eine Membran umfassen. Optional kann diesen eine Methanisierung vorgeschaltet sein, bei der Kohlenstoffmonoxid und Kohlenstoffdioxid in Wasser und Methan umgewandelt werden. Bei der Verwendung einer Kombination aus Temperaturwechseladsorption und Flüssig-Stickstoffwäsche wird durch die Temperaturwechseladsorption zunächst Wasser und der Rest des nach der Kohlenstoffdioxidentfernung und optionaler Methanisierung verbleibenden Kohlenstoffdioxids aus dem ersten Restgas 1a entfernt. Durch die Flüssig-Stickstoffwäsche werden insbesondere weitere Verunreinigungen wie Argon, Methan und verbliebenes Kohlenstoffmonoxid aus dem ersten Restgas 1a. Der durch die Aufbereitung entstandene Wasserstoff 2 enthält dabei bereits Stickstoff in einem Verhältnis von nahezu 3:1 (Wasserstoff zu Stickstoff). Da für die Ammoniaksynthese ein Verhältnis von 3:1 notwendig ist, ist bei der Verwendung einer Flüssig-Stickstoffwäsche für die Wasserstoffaufbereitung 60 anschließend nur noch eine geringe Stickstoffzuspeisung notwendig.

Der Wasserstoff 2 wird nach Zuspeisen eines Stickstoffstroms, dessen Gewinnung unten erläutert wird, unter Erhalt eines ammoniakhaltigen Produktgases 4 einer Ammoniaksynthese 30 unterworfen. Anschließend wird das ammoniakhaltige Produktgas 4 unter Erhalt von verflüssigtem Ammoniak 5 einer Kühlung 40 unterworfen. Bei der Kühlung 40 wird das ammoniakhaltige Produktgas 4 auf eine Temperatur von 0°C bis -10°C abgekühlt, so dass der im ammoniakhaltigen Produktgas 4 enthaltene Ammoniak kondensiert. Dabei verbleiben andere Komponenten des ammoniakhaltige Produktgas 4 im gasförmigen Zustand und können somit abgetrennt werden.

Das Kohlenstoffdioxid 6 wird unter Erhalt von beispielsweise verflüssigtem bzw. aufbereitetem Kohlenstoffdioxid 8 einer Kohlenstoffdioxidaufbereitung 50 unterworfen. Die Aufbereitung kann jeweils eine Reinigung, Trocknung, Abkühlung, Verdichtung, Verflüssigung, Druckbeaufschlagung im flüssigen Zustand, Rückverdampfung und jeden anderen sinnvollen Verfahrensschritt umfassen.

Zur Klarstellung sei nochmals angemerkt, dass das Gasgemisch 1 Wasserstoff und Kohlenstoffdioxid enthält, der Wasserstoff 2 vornehmlich Wasserstoff bzw. im Fall einer Flüssig-Stickstoffwäsche vornehmlich Wasserstoff und Stickstoff enthält, d. h. gegenüber dem Gasgemisch 1 weiter an Wasserstoff angereichert und an Kohlenstoffdioxid abgereichert ist, das erste Restgas 1a gegenüber dem Gasgemisch 1 an Kohlenstoffdioxid abgereichert und an Wasserstoff angereichert ist und das Kohlenstoffdioxid 6 gegenüber dem Gasgemisch 1 an Kohlenstoffdioxid angereichert ist. Der verflüssigte Ammoniak 5 und das aufbereitete Kohlenstoffdioxid 8 können unabhängig voneinander in gasförmigem oder flüssigem Zustand vorliegen.

Zur Kühlung 40 des ammoniakhaltigen Produktgases 4 wird das durch die Kohlenstoffdioxidaufbereitung 50 erhaltene aufbereitete Kohlenstoffdioxid 8 oder ein Teil hiervon verwendet. Dazu wird das aufbereitete Kohlenstoffdioxid 8 insbesondere durch eine Expansionseinheit 55, beispielsweise durch eine Expansionsturbine oder ein Drosselventil, entspannt und anschließend als Kältemedium zur Kühlung 40 des ammoniakhaltigen Produktgases 4 verwendet. Anschließend wird das als Kältemedium verwendete aufbereitete Kohlenstoffdioxid 8 wieder der Kohlenstoffdioxidaufbereitung 50 zugeführt. Die verbleibende Menge an Kohlenstoffdioxid, die nicht für die Kühlung 40 verwendet wird, kann als Produktstrom 9 ausgegeben werden. Bevor das ammoniakhaltige Produktgas 4 der Kühlung 40 unter Verwendung des aufbereiteten Kohlenstoffdioxids 8 zugeführt wird, kann das ammoniakhaltige Produktgas 4 insbesondere einer Vorkühlung mit Wärmetauscher, beispielsweise Luft-Wärmetauscher, zugeführt werden, um einen ammoniakhaltige Produktgas 4 herunterzukühlen, bevor es in der Kühlung 40 mittels des aufbereiteten Kohlenstoffdioxids 8 verflüssigt wird.

Weiterhin kann das aufbereitete Kohlenstoffdioxid 8 auch als Kältemedium für die Kondensation und/oder Kühlung des Kohlenstoffdioxids 6 in der Kohlenstoffdioxidaufbereitung 50 verwendet werden.

Die bei der Ammoniaksynthese 30 und der Kühlung 40 entstehenden Restgase, werden im Verfahren weiterverwendet, indem diese einem der vorherigen Schritte zugeführt werden. So können beispielsweise bei der Kühlung 40 verbleibende Teile des ammoniakhaltigen Produktgases 4, die nicht kondensieren, wieder der Ammoniaksynthese 30 bzw. dem Verdichter 70 zugeführt werden und verbleiben somit im Kreislauf.

Weiter ist in Figur 1 ein Stickstoffbereitstellungsschritt 80 veranschaulicht, bei dem es sich beispielsweise um einen kryogenen Luftzerlegungsschritt handeln kann, welchem Einsatzluft zugeführt und ein Stickstoffstrom sowie ein Sauerstoffstrom und ggf. weitere, nicht gesondert veranschaulichte Luftprodukte entnommen werden können. Wie oben beschrieben wird der Stickstoffstrom mit dem Wasserstoff 2 gemischt und der Ammoniaksynthese 30 insbesondere über einen Verdichter 70 zugeführt. Der Verdichter 70 kann dabei insbesondere mehrstufig, beispielsweise dreistufig, ausgeführt sein. Der Sauerstoffstrom wird, im Fall einer partiellen Oxidation oder einer autothermen Reformierung, wiederum dem Wasserstoffherstellungsschritt 10c der Vorbehandlung 10 zugeführt.

Ferner ist ein Ammoniakspeicherschritt 90 dargestellt, dem der verflüssigte Ammoniak 5 zugeführt wird. In dem Ammoniakspeicherschritt 90 verdampfendes Boil-Offgas kann in einem Kondensationsschritt 95 rückverflüssigt werden. In dem Ammoniakspeicherschritt 90 gespeicherter Ammoniak 5a kann in Form eines Stoffstroms als Produkt des Verfahrens entnommen werden. Zur Rückverflüssigung im Kondensationsschritt 95 kann insbesondere aufbereitetes Kohlenstoffdioxid 8 als Kältemedium verwendet werden. Denkbar ist auch, dass zur Rückverflüssigung im Kondensationsschritt 95 Kohlenstoffdioxid aus einem Tank als Kältemedium verwendet wird.

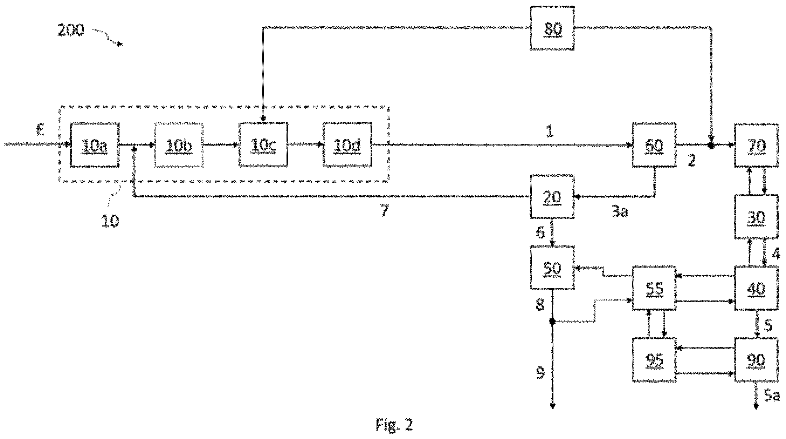

In Figur 2 sind ein Verfahren bzw. eine Anlage gemäß einer weiteren Ausgestaltung der vorliegenden Erfindung veranschaulicht und insgesamt mit 200 bezeichnet. Die einzelnen Verfahrensschritt bzw. Anlageneinheiten, die dieselben Bezugszeichen wie in der Figur 1 aufweisen sind dieselben und erfüllen die gleichen Funktionen. Im Folgenden sollen daher nur die Unterschiede aufgezeigt werden.

Im Gegensatz zum in Figur 1 gezeigten Verlauf wird das durch die Vorbehandlung 10 erhaltene Gas direkt als Kohlenstoffdioxid und Wasserstoff enthaltendes Gasgemisch 1, der der Wasserstoffaufbereitung 60 zugeführt wird, verwendet. In der Wasserstoffaufbereitung 60 entsteht Wasserstoff 2, der gegenüber dem Gasgemisch 1 an Wasserstoff angereicherte und an Kohlenstoffdioxid abgereichert ist und der zusammen mit dem Stickstoffstrom über einen Verdichter 70 der Ammoniaksynthese 30 zugeführt wird. In diesem Fall kann die Wasserstoffaufbereitung 60 lediglich eine Druckwechseladsorption und/oder eine Membran sein, da es sich bei der Flüssig-Stickstoffwäsche um einen Niedrigtemperaturprozess handelt, bei dem das sich noch im Gasgemisch befindende Wasser und Kohlenstoffdioxid gefrieren würden und bei einer Methanisierung würde neben Kohlenstoffmonoxid auch Kohlenstoffdioxid zurück zu Methan umgewandelt.

Ein an Wasserstoff abgereichertes und an Kohlenstoffdioxid angereichertes drittes Restgas 3a wird der Kohlenstoffdioxidentfernung 20 unterworfen. Dabei entsteht Kohlenstoffdioxid 6, der der Kohlenstoffdioxidaufbereitung 50 zugeführt wird und ein an Kohlenstoffdioxid gegenüber dem dritten Restgas 3a abgereichertes viertes Restgas 7, das wiederum der Vorbehandlung 10, insbesondere zumindest teilweise stromaufwärts der Vorreformierung 10b und/oder teilweise zwischen der Vorreformierung 10b und dem Wasserstoffherstellungsschritt 10c, zugeführt oder als Brenngas zur Bereitstellung von Wärme verwendet wird.

Während sowohl in Figur 1 eine Vorreformierung 10b in der Vorbehandlung 10 gezeigt ist, ist darauf hingewiesen, dass die Vorbehandlung 10 diesen Schritt nicht umfassen muss. Weiterhin muss der Sauerstoffstrom 80 auch nicht dem Wasserstoffherstellungsschritt 10c zugeführt werden.

## Patentansprüche

1. Verfahren (100, 200) zur Herstellung von Ammoniak, bei dem
- Wasserstoff (2) bereitgestellt, mit Stickstoff gemischt und unter Erhalt eines ammoniakhaltigen Produktgases (4) einer Ammoniaksynthese (30) unterworfen wird,
- das ammoniakhaltige Produktgas (4) unter Erhalt von verflüssigtem Ammoniak (5) einer Kühlung (40) unterworfen wird,
- die Bereitstellung des Wasserstoffs (2) umfasst, ein Wasserstoff und Kohlenstoffdioxid enthaltendes Gasgemisch (1) bereitzustellen und unter Erhalt von Wasserstoff (2) und Kohlenstoffdioxid (6, 8) Aufbereitungsschritten zu unterwerfen, die eine Wasserstoffaufbereitung (60) und eine Kohlenstoffdioxidabtrennung (20) umfassen,
**dadurch gekennzeichnet, dass**
für die Kühlung (40) des ammoniakhaltigen Produktgases (4) das Kohlenstoffdioxid (6,8) oder ein Teil hiervon als Kältemedium verwendet wird.

2. Verfahren (100, 200) nach Anspruch 1, bei dem das Kohlenstoffdioxid (6) unter Erhalt von aufbereitetem Kohlenstoffdioxid (8) einer Kohlenstoffdioxidaufbereitung (50) unterworfen wird, die insbesondere eine Verdichtung, Kühlung, Trocknung, Kondensation und/oder Aufreinigung umfasst.

3. Verfahren (100, 200) nach Anspruch 2, bei dem zur Kühlung und/oder Kondensation in der Kohlenstoffdioxidaufbereitung (50) das aufbereitete Kohlenstoffdioxid (8) oder ein Teil hiervon als Kältemedium verwendet wird.

4. Verfahren (100, 200) nach einem der vorstehenden Ansprüche, bei dem der Ammoniaksynthese (30) ferner ein Stickstoffstrom oder ein Teil hiervon zugeführt wird, der unter Verwendung eines Stickstoffbereitstellungsschritts (80) erzeugt wird, wobei der Stickstoffbereitstellungsschritt (80) eine kryogene Luftzerlegung und/oder ein Membranverfahren und/oder ein adsorptives Verfahren zur Abtrennung von Stickstoff aus Luft umfasst.

5. Verfahren (100, 200) nach dem vorhergehenden Anspruch, bei dem in der kryogenen Luftzerlegung das Kohlenstoffdioxid (6, 8) oder ein Teil hiervon als Kältemedium verwendet wird.

6. Verfahren (100) nach einem der vorhergehenden Ansprüche, bei dem die Wasserstoffaufbereitung (60) eines umfasst von einer Druckwechseladsorption, einer Temperaturwechseladsorption und einer Flüssig-Stickstoffwäsche, und/ oder eine Membran, wobei der Wasserstoffaufbereitung (60) insbesondere eine Methanisierung vorgeschaltet sein kann.

7. Verfahren (100, 200) nach einem der vorhergehenden Ansprüche, bei dem das Wasserstoff und Kohlenstoffdioxid enthaltende Gasgemisch (1) unter Erhalt des Kohlenstoffdioxids (6) und eines Wasserstoff enthaltenden ersten Restgases (1a) der Kohlenstoffdioxidabtrennung (20) unterworfen wird, wobei das erste Restgas (1a) oder eines Teils hiervon unter Erhalt des Wasserstoffs (2) und eines zweiten Restgases (3) der Wasserstoffaufbereitung (60) unterworfen wird, oder
bei dem das Wasserstoff und Kohlenstoffdioxid enthaltende Gasgemisch (1) unter Erhalt des Wasserstoffs (2) und eines Wasserstoff und Kohlenstoffdioxid enthaltenden dritten Restgases (3a) der Wasserstoffaufbereitung (60) unterworfen wird, wobei das dritte Restgas (3a) oder ein Teils hiervon unter Erhalt des Kohlenstoffdioxids (6, 8) und eines vierten Restgases (7) der Kohlenstoffdioxidabtrennung (20) unterworfen wird.

8. Verfahren (100, 200) nach einem der vorhergehenden Ansprüche, bei dem zur Kühlung (40) des ammoniakhaltigen Produktgas (4) ein weiterer Kältekreislauf, insbesondere ein Kältekreislauf mit einem Ammoniak-Kältemedium, verwendet wird.

9. Verfahren (100, 200) nach einem der vorhergehenden Ansprüche, bei dem das als Kältemedium verwendet aufbereitete Kohlenstoffdioxid (8) oder ein Teil hiervon durch eine Expansionseinheit (55), insbesondere eine Expansionsturbine oder ein Drosselventil, entspannt wird und anschließend als Kältemedium verwendet wird.

10. Verfahren (100, 200) nach dem vorhergehenden Anspruch, wobei die Expansionsturbine mit einem Verdichter der Kohlenstoffdioxidaufbereitung (50) und/oder dem Verdichter (70) vor der Ammoniaksynthese (30) einen Compander bilden.

11. Verfahren (100, 200) nach einem der vorhergehenden Ansprüche, bei dem das zur Kühlung (40) des ammoniakhaltigen Produktgas (4) als Kältemedium verwendete aufbereitete Kohlenstoffdioxid (8) anschließend wieder der Kohlenstoffdioxidaufbereitung (50) unterworfen wird.

12. Verfahren (100, 200), nach einem der vorhergehenden Ansprüche, bei dem der zumindest teilweise verflüssigte Ammoniak (5) einem Ammoniakspeicherschritt (90) zugeführt wird, bei dem der zumindest teilweise verflüssigte Ammoniak (5) gespeichert wird, wobei im Ammoniakspeicherschritt (90) entstehendes Boil-Offgas in einem Kondensationsschritt (95) rückverflüssigt wird, wobei im Kondensationsschritt (95) insbesondere aufbereitetes Kohlenstoffdioxid (8) als Kältemedium verwendet wird.

13. Anlage (100, 200) zur Herstellung von, insbesondere blauem, Ammoniak, die dafür eingerichtet ist,
Wasserstoff (2) bereitzustellen und unter Erhalt von ammoniakhaltigem Produktgas (4) einer Ammoniaksynthese (30) zu unterwerfen,
das ammoniakhaltige Produktgas (4) unter Erhalt von verflüssigtem Ammoniak (5) einer Kühlung (40) zu unterwerfen,
zur Bereitstellung des Wasserstoffs (2), ein Wasserstoff und Kohlenstoffdioxid enthaltendes Gasgemisch (1) bereitzustellen und unter Erhalt von Wasserstoff (2) und Kohlenstoffdioxid (6, 8) Aufbereitungsschritten zu unterwerfen, die eine Wasserstoffaufbereitung (60) und eine Kohlenstoffdioxidabtrennung (20) umfassen,
**dadurch gekennzeichnet, dass**
für die Kühlung (40) das Kohlenstoffdioxid (6, 8) oder ein Teil hiervon als Kältemedium verwendet wird.

14. Anlage (100, 200) nach Anspruch 13, die zur Durchführung eines Verfahrens nach einem der Ansprüche 1 bis 12 eingerichtet ist.
